(19) Europäisches Patentamt
European Patent Office
Office européen des brevets

(11) EP 1 348 145 B1

(12) EUROPEAN PATENT SPECIFICATION

(45) Date of publication and mention of the grant of the patent:
**27.09.2006 Bulletin 2006/39**

(21) Application number: **01272674.1**

(22) Date of filing: **28.12.2001**

(51) Int Cl.:
***G02C 7/00*** *(2006.01)* ***G02C 7/06*** *(2006.01)*

(86) International application number:
**PCT/EP2001/015352**

(87) International publication number:
**WO 2002/054137 (11.07.2002 Gazette 2002/28)**

# (54) HOLOGRAPHIC MULTIFOCAL LENS

HOLOGRAPHISCHE MULTIFOKALLINSE

LENTILLE HOLOGRAPHIQUE MULTIFOCALE

(84) Designated Contracting States:
**AT BE CH CY DE DK ES FI FR GB GR IE IT LI LU MC NL PT SE TR**
Designated Extension States:
**SI**

(30) Priority: **29.12.2000 US 258923 P**

(43) Date of publication of application:
**01.10.2003 Bulletin 2003/40**

(73) Proprietors:
- **Novartis AG**
  **4056 Basel (CH)**
  Designated Contracting States:
  **BE CH CY DE DK ES FI FR GB GR IE IT LI LU MC NL PT SE TR**
- **Novartis Pharma GmbH**
  **1230 Wien (AT)**
  Designated Contracting States:
  **AT**

(72) Inventors:
- **ZHANG, Xiaoxiao**
  **Fort Worth, TX 76132 (US)**
- **YE, Ming**
  **Fort Worth, TX 76132 (US)**
- **LI, Ruolin**
  **Woodbury, MN 55125 (US)**

(74) Representative: **Gros, Florent et al**
**Novartis AG**
**4002 Basel (CH)**

(56) References cited:
**WO-A-99/34248**
**US-A- 5 221 977**
**US-A- 5 997 140**
**US-A- 6 139 147**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The invention relates to an ophthalmic lens, such as a contact lens. Specifically, the invention relates to a multifocal optical lens comprising holographic optical elements.

Historical records document that since at least the early 13 th century people have used the light refracting properties of various transparent materials to improve vision. The earliest eyeglasses were simple convex lenses made of quartz to aid farsightedness. From these early magnifying glasses evolved the specialized glass and plastic eyeglasses and contact lenses commonly used by millions.

The recent advances in polymer chemistry have greatly improved the quality and comfort of both eyeglasses and contact lenses. However, these improvements have primarily benefited those patients who require only single focus corrective lenses. Individuals requiring multifocal vision correction have seen little improvement in the unique problems that they endure.

For example, many individuals who wear bi or tri-focal glasses experience ghost images arising from the near proximity of two lenses with different focal points. The lingering problems associated with current multi-focal vision correction can most clearly be seen in the area of contact lenses.

Several bifocal lens design concepts for ophthalmic lenses, e.g., contact lenses or intraocular lenses, are available. One type of bifocal lens is the diffractive simultaneous vision type. A diffractive simultaneous type lens comprises a diffractive optical element and a refractive optical element. Diffraction is the change in the direction and intensity of light after passing by an obstacle or through an aperture. Refraction is the turning or bending of light when it passes from one medium to another such as from air to water. A diffractive simultaneous type lens splits the light entering the eye into near and far images and projects the images simultaneously on the retina. The presence of dual images on the retina renders neither image completely clear. Furthermore, under low light conditions these lenses create contrast and intensity problems for the user.

Another type of bifocal contact lens is the concentric simultaneous vision type. These types of lenses possess concentric areas of differing focal power. For example, one concentric area provides a focal power for near images while a second concentric area provides a different focal power for far images. The concentric focal areas focus both the near and far images onto a common focal region of the retina thus forming an overlap of images, which blurs both images. For example, when a distant object is viewed through a concentric simultaneous bifocal lens, images of near objects are simultaneously present, veiling or fogging the image of the distant object. Furthermore, because two optical zones share the light entering the concentric simultaneous bifocal lens, contrast and intensity of the focused images are compromised, especially under low light conditions.

Another type of bifocal contact lens is the translating type. The translating type generally follows the design of a conventional bifocal eyeglass lens in that there are two distinct localized sections with different focal powers. To view distant or near objects, the wearer must move the lens on the eye until the proper focal power is reached. The movement of the lens on the eye can present a problem for a wearer because the lens must move a relatively large distance on the eye to change from one focal power to the other. Furthermore, the movement of the lens must be complete before clear vision can be realized.

Other optical lens designs incorporate an active approach to achieve multifocal function. For example, one simultaneous type bifocal lens incorporates thermochromatic coatings to alleviate overlapping of near and far images. In this design a thermochromatic material is applied to the distant optical area of the lens. When the wearer looks down to focus on a near object the thermochromatic material is activated thereby blocking light from entering the distant optical area and preventing the formation of an overlapping distant image. Unfortunately, currently available thermochromatic materials do not activate and deactivate quickly enough for this design to be of practical use.

Another active approach encompasses physically changing the focal length of a lens using micro-circuitry powered by a switchable battery or photocell. This approach is currently not practical because the circuitry and power source necessary to accomplish this task must be small enough to be packaged in a contact lens yet durable enough and reliable enough to withstand the physical forces that are regularly applied to contact lenses, such as taking them in and out to clean them.

More recently, it was discovered that holographic principles might be utilized to produce an active multifocal lens with a high degree of clarity. WO99/34248, priority filed December 29, 1997, discusses an optical lens and method of producing an optical lens comprising a combination (*i.e.* two layered) transmission volume holographic optical element ("HOE"). This lens utilizes a combination hologram to provide a second optical power when the light entering the lens is within a pre-programmed angle range (*i.e.,* the activating angle of the HOE"). The wearer may chose between the optical powers by changing the incident angle of the incoming light. For example, the wearer can change the incident angle of the light by looking down while maintaining the position of the head.

The combination transmission volume holographic lens represents a great improvement over prior multifocal lenses in that this lens forms clearly perceivable images that are focused by one optical power at a time. However, forming an optical lens comprising a multilayer holographic element where that element includes a specific optical power

can be a complicated manufacturing task.

Accordingly, a need exists for a multifocal optical lens that allows a user to actively select between at least 2 focusing powers, yet does not require multiple layers of holograms.

An object of the invention is to provide an active multifocal lens.

A further object of the invention is to provide a multifocal lens that does not produce dual axially aligned images.

A further object of the invention is to provide a multifocal lens that may be easily switched from one focal power to another by a wearer.

This and other objects and advantages of the present invention are provided by an optical lens as defined in claim 1.

The foregoing and other objects, advantages and features of the invention, and the manner in which the same are accomplished will become more readily apparent upon consideration of the following detailed description of the invention taken in conjunction with the accompanying drawings, which illustrate preferred and exemplary embodiments, and wherein:

FIG. 1 is a schematic representation of the recording of a transmission interference fringe pattern in a recording medium.

FIG. 1(b) is a schematic representation of the operation of a transmission volume holographic optical element according to the invention.

FIG. 2 is a schematic representation of the recording of a reflection interference fringe pattern in a recording medium.

FIG. 2(a) is a schematic representation of the operation of a reflection holographic optical element according to the invention.

FIG. 3 is a side view of a bifocal lens that may be utilized in the practice of the invention.

FIG. 3(a) is a frontal view of a bifocal lens that may be utilized in the practice of the invention.

FIG. 4 is a schematic representation of the operation of a bifocal lens as shown in FIG. 3.

FIG. 4(a) is a schematic representation of the operation of a bifocal lens as shown in FIG. 3.

FIG. 5 is a schematic representation of the operation of a multifocal lens according to the invention.

FIG. 5(a) is a schematic representation of the operation of a multifocal lens according to the invention.

FIG. 6 is a schematic representation of the operation of a multifocal lens according to the invention.

FIG. 6(a) is a schematic representation of the operation of a multifocal lens according to the invention.

FIG. 7 is a drawing of a further embodiment of the multifocal lens according to the invention.

FIG. 8 is a schematic representation of a method of manufacturing a multifocal lens according to the invention.

FIG. 8(b) is a schematic representation of a method of manufacturing a multifocal lens according to the invention.

FIG. 8(c) is a schematic representation of a method of manufacturing a multifocal lens according to the invention.

The invention provides active multifocal ophthalmic lenses. The invention additionally provides active multifocal lenses for spectacles. The invention also may be utilized in intraocular devices. Hereinafter, the term "optical lenses" is used to indicate both ophthalmic lenses (extra- and intraocular devices) and spectacle lenses, unless otherwise indicated.

Unlike previous holography- based multifocal lenses, however, the holographic optical lens element of the lens according to the invention is not intended to provide focal correction. Instead, the holographic optical lens element according to the invention is designed to either block or redirect light rays that are within its activating angle thus preventing these light rays from focusing on the primary image receptors of the retina.

Generally speaking, holography is a photographic-like process for bending and focusing light and is most commonly known for forming light waves into a three-dimensional image. The formation of three-dimensional objects,

however, is a special application of the principles of holography. Holograms exist that do not form three-dimensional objects. The hologram of this invention is such a hologram.

Holography is based upon the wave theory of light. Light is a type of electromagnetic radiation just like radio waves. Like radio waves, light travels in transverse waves that have crests and troughs. A swell or wave in the ocean is a good example of transverse wave motion. The crests and troughs define the wavelength (the distance between crests) of the wave.

Laser light, the type of light that makes holography possible, is a special kind of light. Preferably, the laser light used in holography is "coherent" which means that the light emitted from the laser is of the same wavelength and is in phase. In other words, the light waves that make up the laser beam all have the same distance between their crests and all of the waves rise and fall together.

If two identical laser beams are crossed, the waves of the beams will interfere with one another. For example, a crest of a wave from one beam may meet a crest of a wave from the other beam. This interference has the effect of forming a specific interference fringe pattern that identifies the particular manner in which the laser beams were crossed (i.e. the angles of the beams).

Interference fringe patterns may be recorded. For example, an interference fringe pattern may be recorded by or programmed into a photopolymerizable material. Structures that contain a recorded interference pattern are referred to herein as holographic elements or more specifically as holographic optical elements ("HOE"). The HOEs suitable for the active optical lens of the claimed invention are transmission volume and reflective volume HOEs. The manner of creating transmission volume and reflection volume HOEs are well known to those skilled in the art and will not be repeated herein. However, as an aid to the reader a brief discussion of transmission and reflection HOEs follows.

Fig. 1 is a schematic representation of the recording of an interference fringe pattern in a recording medium (a UV photopolymerizable optical material) **1** to create a transmission volume HOE. The laser beam that is perpendicular to the UV photopolymerizable optical material is referred to as the reference beam **2**. The laser beam that intersects the reference beam at an angle is called the object beam **4**. Throughout this detailed description, elements such as light rays that are both structurally and functionally equivalent in the various embodiments will be referenced by a single reference numeral. In this example, both the reference beam and the object beam are UV laser beams. The interaction of the light waves from the reference beam **2** and the object beam **4** creates planes of interference known as an interference fringe pattern. The interference fringe pattern created by the UV reference and object beams is recorded into the photopolymerizable optical material and manifests itself as a periodic variation in the refractive index of the optical material. This periodic variation in the refractive index is known as a volume grating structure **6**. Since the volume grating structure **6** is a variation in the refractive index of the optical material, the volume grating structure **6** effects the path of light that passes through the HOE **7**.

Depending upon the angles of the reference beam and object beam and other variables well known to those skilled in the art of holography, the volume grating structure **6** in the HOE **7** may be programmed to refract only those light waves that enter the optical material within a specified angle. This angle is commonly referred to as the "activating angle" of the volume grating structure and is represented in FIG. 1(b) as angle $\alpha$. The term activating angle as used herein indicates an incident angle of incoming light, which is defined by the angle formed by the advancing direction of incoming light and the axis normal to the HOE surface, that satisfies the Bragg condition such that the incoming light is diffracted by the interference fringe grating structure of the HOE. The activating angle does not have to be a single value and can be a range of angles. The Bragg condition is well known in the optics art, and it is, for example, defined in <u>Coupled Wave Theory for Thick Hologram Gratings</u>, by H. Kogelnik, The Bell System Technical Journal, Vol. 48, No. 9, p. 2909-2947 (Nov. 1969). The Bragg condition can be expressed as

$$\cos(\phi - \Theta) = K/2B$$

wherein $K = 2\pi/\Lambda$, $\Lambda$= the grating period of the interference fringes, $\Theta$ is the incident angle of incoming light, $\phi$ is the slant angle of the grating and B is the average propagation constant, which can be expressed as $B = 2\pi n/\lambda$, wherein n is the average refractive index and $\lambda$ is the wavelength of the light. When the Bragg condition is met, up to 100% of incoming light can be coherently diffracted.

FIG. 1(b) schematically describes the operation of the transmission volume HOE **7** of FIG. 1 during "playback" (*i.e.* when light is directed through the HOE). The z-axis, which is normal to the planar surface of the HOE **7** and the advancing direction of incoming light wave **8** form the incident angle $\Theta$. Incident angle $\Theta$ is within the activating angle $\alpha$. Accordingly, the light wave **8** is diffracted by the pre-programmed volume grating structure **6** of the HOE **7** and exits the HOE **7** at an exiting angle $\rho$ that is different from the incident angle $\Theta$. The other light wave **10** enters the HOE **7** at an angle outside the activating angle. Because this light wave is outside the activating angle, it passes through the HOE **7** unchanged as shown in FIG. 1(b). In this manner, the HOE **7** selectively alters the path of light that passes through it.

Reflection HOEs are similar to transmission HOEs. The most recognizable difference between the two is that reflection HOEs reflect light waves rather than allowing them to pass through. The difference in operation is due to a difference in the manner in which the two HOEs are formed.

FIG. 2 is a schematic representing the recordation of a reflection HOE. In this embodiment, the object beam **4** is adjusted 180° from the orientation of the object beam in FIG. 1. In this example, the resulting volume grating structure **12** is similar to that of the transmission volume HOE in that it has an activating angle $\alpha$ comparable to that of the transmission volume HOE. Referring now to FIG. 2 (a), when a light wave **8** having an incident angle $\Theta$ within the activating angle $\alpha$, strikes the HOE, the light wave **8** is reflected by the HOE. As shown in FIG. 2 (a), light waves outside the activating angle **10** pass through the HOE undisturbed.

FIG. 3 and FIG. 3(a) are side and front views, respectively, of an exemplary bifocal contact lens **14** utilized by the present invention. The invention is disclosed in reference to a bifocal contact lens for illustration purposes only. The optical lens of the present invention can have more than two optical powers, and encompasses spectacle and intraocular lenses as well. The lens **14** is a contact lens having a first optical element **16** with a first focusing power and a second optical element **18** with a second focusing power. Typically the optical elements are arranged such that the first optical element (or upper optical element) **16** is designed for correction of distant vision while the second optical element (or lower optical element) **18** is designed for correction of near vision. This geometric orientation is typically used because the cornea, upon which the lens rests, basically has a spherical surface. Consequently, when the wearer looks down (as when reading a book) the lens will translate upward slightly so the wearer will predominately be looking through the lower half of the lens.

FIGs. 4 and 4(a) illustrate the corrective nature of the bifocal lens of FIGs. 3 and 3(a). In FIG. 4, light from a distant object **20** is focused by the first optical element **16** to a focal point **24** on the retina, and more specifically at the fovea, the area of the retina with the greatest acuity. At the same time, the second optical element **18** focuses the light from the distant object at an area **25** in front of the retina. The creation of axially aligned dual images results in neither image being clear to the wearer.

Similarly, FIG. 4(a) illustrates how the bifocal lens of FIGS. 3 focuses light received from a near object **22**. In this instance, the first optical element **16** (for distance correction) incorrectly focuses the light at a focal point **26** behind the retina while the second optical element **18** correctly focuses an image at the retina. Again, axially aligned images are generated and blurry vision is the result.

In one aspect, the invention encompasses an optical lens comprising at least one transmission or reflection HOE of the type shown in FIG. 1(a) or 2(a) and at least one focusing element such as those shown in FIG. 3. In a preferred embodiment, the HOE is characterized by an interference fringe pattern having a finite ray acceptance angle range that defracts up to 100% of incoming light when the Bragg condition is met. The HOE is further characterized as being a piano lens possessing substantially neutral focusing power. In reality, the HOE will possess some degree of inherent optical power due to its thickness and geometric shape. However, for purposes of this discussion the optical power of the HOE lens is ignored in order to simplify the illustration of the invention since the inherent optical power can be easily factored into the teaching of the present invention.

FIGS. 5 and 5(a) illustrate an embodiment of the invention utilizing a transmission HOE. In FIG. 5, light from a distant object **20** is directed to a bifocal lens **28** comprising a first focusing element **16** and a second focusing element **18**. The first focusing element 16 and the second focusing element function as described in relation to FIG. 3. The bifocal lens **28** also comprises a first transmission HOE **30** and a second transmission HOE **32**. In FIG. 5 the first transmission HOE **30** is situated adjacent to the outer surface of the first focusing element **16** while the second transmission HOE **32** is situated adjacent the outer surface of the second focusing element **18**. The position of the elements could be reversed, however, with the HOE elements adjacent to the inner surface of the focusing elements.

The first transmission HOE **30** is programmed with a volume grating having an activating angle or a range of activating angles which diffract incoming light having the required incident angle. Likewise the second transmission HOE **32** is programmed with a volume grating having an activating angle or a finite range of activating angles which diffracts incoming light having the required incident angle. Preferably the first and second HOEs are programmed with non-overlapping activating angles or ranges of activating angles.

FIG. 5 also illustrates the situation where a wearer of the bifocal lens **28** is viewing a distant object. Light from a distant object **20** strikes the first transmission HOE **30** at an angle that does not activate the first transmission HOE **30**. In other words, the light from the distant object **20** forms an incident angle that is outside the activation angle of the first transmission HOE **30**. The light from the distant object **20** passes through the first transmission HOE **30** and is focused in accordance with the first focusing element **16**, in combination with the optical power of the crystalline lens of the eye (which is not shown), to a focal point **24** on the retina of the eye, more specifically on the fovea. However, the second transmission HOE **32** is programmed with a volume grating structure having an activation angle that diffracts light having the incident angle exhibited by the light from the distant object **20**. Therefore, the second transmission HOE **32** diffracts the incoming light, sending it to an area of the retina associated with the far periphery.

FIG. 5(a) illustrates the situation where a wearer is viewing a near object. The second transmission HOE **32**

is programmed such that it is not activated by light from the near object **22.** In other words, the light from the near object **22** forms an incident angle that is outside the activation angle of the second transmission HOE **32.** The light from the near object **22** passes through the second transmission HOE **32** and is focused in accordance with the second focusing element **18,** in combination with the optical power of the crystalline lens of the eye (which is not shown), to a focal point **24** on the retina of the eye, more specifically on the fovea. However, the first transmission HOE **30** is programmed with a volume grating structure having an activation angle that diffracts light having the incident angle exhibited by the light from the near object **22.** Therefore, the first transmission HOE **30** diffracts the incoming light **22,** sending it to an area of the retina associated with the far periphery.

The incident angle of incoming light with respect to the active bifocal lens, more specifically to the HOE portion of the active lens, can be changed by various means. For example, the active lens can be tilted to change the incident angle of the incoming light (i.e. the wearer of the lens can change the incident angle of the light by looking down while maintaining the position of the head). The tilt of the lens shown in FIG. 5(a) in relation to the z-axis illustrates this method of actively switching between the focal powers of the lens. Alternatively, the lens may have a position controlling mechanism that can be actively controlled by the wearer of the lens with one or more muscles of the eye. For example, the lens can be shaped to have a prism ballast such that the movement of the lens can be controlled with the lower eyelid. The activating angle of the lens illustrated in FIG. 5(a) is exaggerated to more easily explain the present invention, and thus, the activating angle of the active lens does not have to be as large as that shown for the tilted lens illustrated in FIG. 5(a). In fact, HOEs suitable for the present invention can be programmed to have a wide range of different activating angles in accordance with the HOE programming methods known in the holographic art. Accordingly, the degree of movement required for the user to switch the HOEs on and off (or stated differently, the degree of movement required to switch from one optical power to another) can be easily changed depending on the design criteria and the needs of each lens wearer.

Although the lens of the present invention provides more than one optical power, the lens does not produce dual axially aligned images. Consequently, the active lens does not produce blurred or fogged images unlike conventional bifocal lenses such as concentric simultaneous bifocal lenses. Instead, the lens of the present invention uses only one optical power at a time to form a clearly perceivable image along the wearer's line of sight, more specifically at the fovea.

The non-blurring advantage of the present lens is a result of the design of the lens that utilizes the inherent anatomy of the eye. It is known that the concentration of the retinal receptors outside the fovea is drastically lower than that in the fovea. Consequently, any image focused substantially outside of the fovea (*i.e.* to the far periphery) is not clearly perceived since the image is under-sampled by the retina and easily disregarded by the brain of the lens wearer as peripheral vision or images. It has been found that the visual acuity of a human eye drops to about 20/100 for objects only 8° off the line of sight. In the previously described actively controlling manner, the present lens provides clear images from one optical power at a time by utilizing the inherent anatomy of the eye. Utilizing the inherent retinal receptor anatomy of the eye and the ability to program different ranges of activating angles in the HOE lens, the present active lens uniquely and selectively provides clear images of objects that are located at different distances. In contrast to translating bifocal lenses, the active lens can be easily designed to require only a small movement of the lens to selectively provide images from different distances.

In another embodiment, the invention utilizes a reflection HOE. In FIG. 6, light from a distant object **20** is directed to a bifocal lens **34** comprising a first focusing element **16** and a second focusing element **18**. The first focusing element and the second focusing element provide the same function as described in relation to the transmission HOE embodiment of the invention. The bifocal lens **34** also comprises a first reflection HOE **36** and a second reflection HOE **38.** In FIG. 6 the first reflection HOE **36** is situated adjacent to the outer surface of the first focusing element **16** while the second reflection HOE **38** is situated adjacent the outer surface of the second focusing element **18**. The position of the elements could be reversed, however, with the HOE elements adjacent to the inner surface of the focusing elements.

The first reflection HOE **36** is programmed with a volume grating having an activating angle or a range of activating angles which reflects incoming light having the required incident angle. Likewise the second reflection HOE **38** is programmed with a volume grating having an activating angle or a finite range of activating angles which reflects incoming light having the required incident angle. Preferably the first and second HOEs are programmed with non-overlapping activating angles or ranges of activating angles.

FIG. 6 also illustrates the situation where a wearer of the bifocal lens **34** is viewing a distant object. Light from a distant object **20** strikes the first reflection HOE **36** at an angle that does not activate the first reflection HOE **38**. In other words, the light from the distant object **20** forms an incident angle that is outside the activation angle of the first reflection HOE **36**. The light from the distant object **20** passes through the first reflection HOE **36** and is focused in accordance with the first focusing element **16**, in combination with the optical power of the crystalline lens of the eye (which is not shown), to a focal point **24** on the retina of the eye, more specifically on the fovea. However, the second reflection HOE **38** is programmed with a volume grating structure having an activation angle that reflects light having the incident angle exhibited by the light from the distant object **2**0. Therefore, the second reflection HOE **38** reflects the incoming light, preventing it from entering the eye.

FIG. 6 (a) illustrates the situation where a wearer is viewing a near object. Light from the near object **22** strikes the second reflection HOE **38** at an angle that does not activate the second reflection HOE **38**. In other words, the light from the near object **22** forms an incident angle that is outside the activation angle of the second reflection HOE **38**. The light from the near object **22** passes through the second reflection HOE **38** and is focused in accordance with the second focusing element **18**, in combination with the optical power of the crystalline lens of the eye (which is not shown), to a focal point **24** on the retina of the eye, more specifically on the fovea. However, the first reflection HOE **36** is programmed with a volume grating structure having an activation angle that reflects light having the incident angle exhibited by the light from the near object **22.** Therefore, the first reflection HOE **30** reflects the incoming light, preventing it from entering the eye.

In both the transmission and reflection embodiments, a portion of the available light is removed from the fovea. However, this loss of light has a negligible effect, if any, on the vision of the user because the pupil will quickly enlarge to compensate the light loss to the fovea. Accordingly, the light intensity reaching the fovea will be constant in practice.

HOEs suitable for the present invention can be produced, for example, from a polymerizable or crosslinkable optical material, especially a fluid optical material. The term "fluid" as used herein indicates that a material is capable of flowing like a liquid. Hereinafter and for illustration purposes only, the term polymerizable material is used to indicate both polymerizable and crosslinkable materials, unless otherwise indicated.

Preferably, the polymerizable material used as the recording medium to create the HOE is a biocompatible material. The term biocompatible material as used herein refers to a polymeric material that does not deteriorate appreciably and does not induce a significant immune response or deleterious tissue reaction (e.g., toxic reaction or significant irritation) over time when implanted into or placed adjacent to the biological tissue of a subject. Exemplary biocompatible materials that can be used to produce a HOE suitable for the present invention are discussed in U.S. Pat. No. 5,508,317 to Beat Müller ("Müller '317) and International Patent Application No. PCT/EP96/00246 to Mühlebach, which patent and patent application are further discussed below. Suitable biocompatible optical materials are highly photocrosslinkable or photopolymerizable optical materials, which include derivatives and co-polymers of a polyvinyl alcohol, polyethyleneimine, or polyvinylamine.

In accordance with the present invention, suitable HOE recording mediums are polymerizable and crosslinkable optical materials that can be relatively rapidly photopolymerized or photocrosslinked. Periodic variations in the refractive index can be created within a rapidly polymerizable optical material. In this manner, a volume grating structure can be formed while the optical material is being polymerized to form a solid optical element. An exemplary group of rapidly polymerizing optical materials suitable for the present invention is disclosed in Müller '317. A preferred group of rapidly polymerizing optical materials, as described in Müller '317, are those that have a 1,3-diol basic structure in which a certain percentage of the 1,3-diol units have been modified to a 1,3-dioxane having in the 2-position a radical that is polymerizable but not polymerized. The polymerizable optical material is preferably a derivative of a polyvinyl alcohol having a weight average molecular weight, $M_w$, of at least about 2,000 that, based on the number of hydroxy groups of the polyvinyl alcohol, comprises from about 0.5% to about 80% of units of formula I:

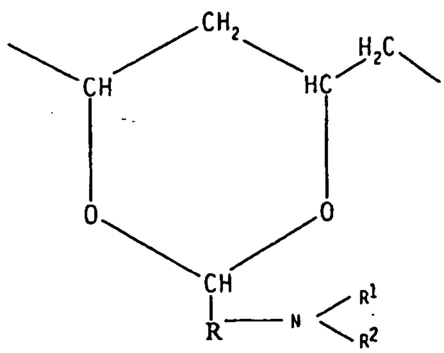

**(I)**

wherein R is lower alkylene having up to 8 carbon atoms,

$R^1$ is hydrogen or lower alkyl and

$R^2$ is an olefinically unsaturated, electron-attracting, copolymerizable radical preferably having up to 25 carbon atoms. $R^2$ is, for example, an olefinically unsaturated acyl radical of formula $R^3$-CO-, in which

$R^3$ is an olefinically unsaturated copolymerizable radical having from 2 to 24 carbon atoms, preferably from 2 to 8 carbon atoms, especially preferably from 2 to 4 carbon atoms.

In another embodiment, the radical $R^2$ is a radical of formula II

$$-CO-NH-(R^4-NH-CO-O)_q-R^5-O-CO-R^3 \qquad (II)$$

wherein q is zero or one;

$R^4$ and $R^5$ are each independently lower alkylene having from 2 to 8 carbon atoms, arylene having from 6 to 12 carbon atoms, a saturated divalent cycloaliphatic group having from 6 to 10 carbon atoms, arylenealkylene or alkylenearylene having from 7 to 14 carbon atoms, or arylenealkylenearylene having from 13 to 16 carbon atoms; and

$R^3$ is as defined above.

Lower alkylene R preferably has up to 8 carbon atoms and may be straight-chained or branched. Suitable examples include octylene, hexylene, pentylene, butylene, propylene, ethylene, methylene, 2-propylene, 2-butylene and 3-pentylene. Preferably, lower alkylene R has up to 6 and more preferably up to 4 carbon atoms. Methylene and butylene are especially preferred. $R^1$ is preferably hydrogen or lower alkyl having up to seven, especially up to four, carbon atoms. Hydrogen is an especially preferred embodiment of $R^1$.

As for $R^4$ and $R^5$, lower alkylene $R^4$ or $R^5$ preferably has from 2 to 6 carbon atoms and is preferably straight-chained. Suitable examples include propylene, butylene, hexylene, dimethylethylene and, especially preferably, ethylene. Arylene $R^4$ and $R^5$ is preferably phenylene that is unsubstituted or is substituted by lower alkyl or lower alkoxy, especially 1,3-phenylene or 1,4-phenylene or methyl-1,4-phenylene. A saturated divalent cycloaliphatic group $R^4$ or $R^5$ is preferably cyclohexylene or cyclohexylene lower alkylene, for example cyclohexylenemethylene, that is unsubstituted or is substituted by one or more methyl groups, such as, for example, trimethylcyclohexylenemethylene or the divalent isophorone radical. The arylene unit of alkylenearylene or arylenealkylene $R^4$ or $R^5$ is preferably phenylene, unsubstituted or substituted by lower alkyl or lower alkoxy, and the alkylene unit thereof is preferably lower alkylene, such as methylene or ethylene, especially methylene. Such radicals $R^4$ or $R^5$ are therefore preferably phenylenemethylene or methylenephenylene. Arylenealkylenearylene $R^4$ or $R^5$ is preferably phenylene-lower alkylene-phenylene having up to 4 carbon atoms in the alkylene unit, for example phenyleneethylenephenylene. The radicals $R^4$ and $R^5$ are each independently preferably lower alkylene having from 2 to 6 carbon atoms, phenylene, unsubstituted or substituted by lower alkylene having from 2 to 6 carbon atoms, phenylene, unsubstituted or substituted by lower alkyl, cyclohexylene or cyclohexylene-lower alkylene, unsubstituted or substituted by lower alkyl, phenylene-lower alkylene, lower alkylene-phenylene or phenylene-lower alkylene-phenylene.

Another group of exemplary polymerizable optical materials suitable for the present invention is disclosed in International Patent Application No. PCT/EP96/00246 to Mühlebach. Suitable optical materials disclosed therein include derivatives of a polyvinyl alcohol, polyethyleneimine or polyvinylamine which contains from about 0.5 to about 80%, based on the number of hydroxyl groups in the polyvinyl alcohol or the number of imine or amine groups in the polyethyleneimine or polyvinylamine, respectively, of units of the formula IV and V:

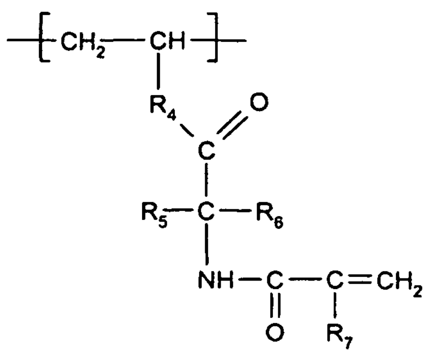

(IV)

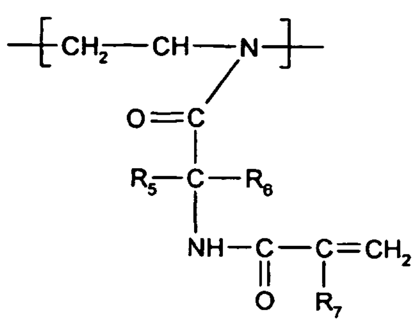

(V)

wherein $R_5$ and $R_6$ are, independently of one another, hydrogen, a $C_1$-$C_8$ alkyl group, and aryl group, or a cyclohexyl group, wherein these groups are unsubstitued or substituted; $R_7$ is hydrogen or a $C_1$-$C_8$ alkyl group, preferably is methyl; and $R_4$ is an -O- or -NH- bridge, preferably -O-. Polyvinyl alcohols, polyethyleneimines and polyvinylamines suitable for the present invention have a number average molecular weight between about 2000 and 1,000,000, preferably between 10,000 and 300,000, more preferably between 10,000 and 100,000, and most preferably 10,000 and 50,000. A particularly suitable polymerizable optical material is a water-soluable derivative of a polyvinyl alcohol having between about 0.5 to

about 80%, preferably between about 1 and 25%, more preferably between about 1.5 and about 12%, based on the number of hydroxyl groups in the polyvinyl alcohol, of the formula IV that has methyl groups for $R_5$ and $R_6$, hydrogen for $R_7$, -O- (*i.e.* an ester link) for $R_4$.

Another group of HOEs suitable for the present invention can be produced from conventional volume holographic optical element recording media. As with the above-described polymerizable materials for HOEs, object light and collimated reference light are simultaneously projected onto an HOE recording medium such that the electromagnetic waves of the object and reference light from interference fringe patterns. The interference fringe patterns, *i.e.,* volume grating structure, are recorded in the HOE medium. When the HOE recording medium is fully exposed, the recorded HOE medium is developed in accordance with a known HOE developing method. Suitable volume holographic optical element recording media include commercially available holographic photography recording materials or plates, such as dichromatic gelatins. Holographic photography recording materials are available from various manufacturers, including Polaroid Corp. When photographic recording materials are used as the HOE, however, toxicological effects of the materials on the ocular environment must be considered. Accordingly, when a conventional photographic HOE material is used, it is preferred that the HOE is encapsulated in a biocompatible optical material (see FIG. 7). Useful biocompatible optical materials for encapsulating the HOE include optical materials that are suitable for the first focusing element of the present lens.

The multifocal lens of the present invention can be produced from separately produced HOEs and focusing elements. The HOEs are fabricated and then permanently joined, adhesively or thermally, to the focusing element to form a coherent contact lens. The focusing elements can be fabricated using techniques well known to those skilled in the art of making contact lenses. The HOEs can be fabricated using the techniques described previously and further discussed below.

An exemplary process for producing a transmission HOE of the present invention is illustrated in FIG. 8. A light source **40,** preferably a laser light source and most preferably a UV laser light source, is provided which produces a light beam **41.** Although the suitable wavelength of the light source depends on the type of HOE employed, preferred wavelength ranges are between 300 nm and 600 nm.

The light source light beam **41** is directed to a beam splitter **42.** The beam splitter **42** splits the light source light beam **41** into two portions, preferably two equal portions. Two mirrors **46** and **48** are placed on opposite sides of the beam splitter **42** such that one split portion **2** of the light source light beam **41** continues on its original path and is directed to the first mirror **46** and the second portion **4** is directed to the second mirror **48.** The first portion **2** of the light beam is the reference beam and the second portion **4** is an object beam. Typically power levels for beams utilized in the practice of the invention are on the order of 1 to 10 $mW/cm^2$ per beam. Those skilled in the art will recognize that the function and designation of the light portions could be reversed. Similarly, the power of the beams and the angle separating the beams may be adjusted as necessary depending upon the particular situation.

A holographic recording medium of the kind previously discussed is provided in recording medium holder **44.** For purposes of illustration, the recording medium is assumed to be of the fluid type and forms non-fluid optical material when exposed to light. The recording medium holder **44** is preferably substantially transparent to light and more preferably transparent to UV light. In the contact lens context the recording medium holder **44** will be a typical contact lens mold. A typical lens mold is produced from a transparent or UV transmissible thermoplastic and has two mold halves, i.e., one mold half having the first surface of the lens and the other mold half having the second surface of the lens. The mold can form the holographic recording medium into a flat, concave or convex structure.

The two mirrors, **46** and **48,** direct the reference light beam 2 and the object light beam **4** to enter the holographic recording medium in proper phase to record a volume grating structure from one surface of the holographic recording medium. Optionally, after the volume grating structure is recorded and the HOE formed, the light set up used for the recording is turned off and the HOE is subjected to a post-curing step to ensure that all of the fluid optical material in the mold is fully polymerized. For example, a UV light source may be used to post-cure the HOE. If needed, a UV light source may also be utilized to partially cure the optical material prior to recording the volume grating structure. Once again, the particular situation will dictate the exact parameters (e.g., light power) for each step. After the HOE is formed it may be attached to an appropriate focusing element. Changing the positions and angles of the mirrors and beam splitters in the arrangement can produce a large variety of HOEs having different activating angles.

Similarly, beam splitters and mirrors may be used to create a reflection HOE. Referring now to FIG. 8(b). A light source **40** directs a light source beam **41** to a beam splitter **42.** The beam splitter **42** splits the light source beam **41** into two portions, preferably two equal portions. One beam, the reference beam **2** is directed to one face of the recording medium holder **44**. Two mirrors **48** and **46** direct the object beam **4** to the other face of the recording medium holder **44**. The recording medium is then polymerized in the same manner as the transmission HOE. Additionally, those skilled in the art will recognize that the previously discussed methods of manufacture may be utilized with little modification to form spectacle lenses.

The combination of light beams, beam splitters and mirrors may be combined in any number of ways to create any number of HOEs. An example of such a combination used to simultaneously create two HOEs is schematically

illustrated in FIG. 8(c).

A light source **40**, preferably a laser light source and most preferably a UV laser light source, is provided which produces a light beam **41**. The light source light beam **41** is directed to a beam splitter **42**. The beam splitter **42** splits the light source light beam **41** into two portions, preferably two equal portions **50** and **52**. The first portion **50** is directed to a second beam splitter **56** and the second portion is directed to a third beam splitter **54**. The second and third beam splitters in turn split the first and second portions of the initial light beam into first and second portions to create 4 light beams - two sets of reference and object beams: **2** and **4** and **2a** and **4a.**

Two sets of mirrors direct the two sets of reference and object beams to a recording medium holder **44.** The first set of reference **2** and object **4** beams are directed to a first portion of a recording medium holder **44** by two mirrors **58** and **60.** The second set of reference **2a** and object **4a** beams are directed to a second portion of a recording medium holder **44** by two mirrors **62** and **64.** The recording medium is then polymerized and a volume grating structure created within the medium in the same manner as discussed previously.

Alternatively, the lens of the present invention can be produced by recording a HOE or multiple HOEs in a multifocal lens. In this embodiment the volume grating structure is recorded directly into the multifocal lens. The recording process is essentially the same as that described above. However, when determining the focusing power of the lens consideration must be given to the volume of the lens devoted to the hologram. Similarly, an effective amount of a light absorbing compound (*e.g.*, a UV absorber when UV laser light is used) may be added to the recording medium in the mold such that the light beams entering from one side do not have a strong polymerizing influence on the optical material that is located closer to the second side of the mold. The addition of the light absorber ensures that a distinct layer of a HOE is formed. The effective amount of a light absorber varies depending on the efficacy of the light absorber, and the amount of the light absorber should not be so high as to significantly interfere with proper polymerization of the optical material. Although preferred light absorbers are biocompatible light absorbers, especially when the present invention is used to produce ophthalmic lenses, non-biocompatible light absorbers can be used. When a non-biocompatible light absorber is used, the resulting HOE can be extracted to remove the light absorber after the HOE is fully formed.

Exemplary UV absorbers suitable for the optical materials include derivatives of o-hydroxybenzophenone, o-hyroxyphenyl salicylates and 2-(o-hydroxyphenyl) benzotriazoles, benzenesulfonic acid and hindered amine. Particularly suitable UV absorbers include topically acceptable UV absorbers, *e.g.*, 2,4-dihydroxybenzophenone, 2,2'-dihydroxy-4,4-dimethoxybenzophenone, 2-hydroxy-4-methoxybenzophenone and the like. An exemplary embodiment uses between 0.05 and 0.2 wt% of a UV absorber, preferably a benzenesulfonic acid derivative, *e.g.*, benzenesulfonic acid, 2,2-([1,1'-biphenyl]-4,4-diyldi-2,1-ethenediyl) bis-disodium salt.

The combination HOE can be produced by a sequential recording method. A closed mold assembly, which has a pair of two mold halves, containing a fluid polymerizable or crosslinkable optical material is subjected to a volume grating structure recording process, and then the mold assembly is opened while leaving the formed HOE layer adhered to the optical surface of one mold half. An additional amount of the polymerizable optical material or a chemically compatible second polymerizable optical material is placed over the first HOE layer. Then, a new pairing mold half, which has a larger cavity volume than the previously removed mold half, is mated with the mold half that has the first HOE layer. The new mold assembly is subjected to a second polymerizing process to form a focusing element layer over the HOE element. The resulting lens is a combination lens having two sequentially formed and adjoined focusing and HOE layers.

In accordance with the present invention, HOEs of the present invention preferably have a diffraction efficiency of at least about 70%, more preferably at least about 80%, most preferably at least 95%, over all or substantially all wavelengths within the visible spectrum of light. Especially suitable HOEs for the present invention have a diffraction efficiency of 100% over all wavelengths of the spectrum of visible light. However, HOEs having a lower diffraction efficiency than specified above can also be utilized for the present invention. Additionally, preferred HOEs for the present invention have a sharp transition angle between the activated and non-activated stages, and not gradual transition angles, such that activation and deactivation of the HOE can be achieved by a small movement of the active lens and that no or minimal transitional images are formed by the HOE during movement between the focusing powers.

As for the first optical material of the active lens, an optical material suitable for a hard lens, gas permeable lens or hydrogel lens can be used. Suitable polymeric materials for the first optical element of the active ophthalmic lens include hydrogel materials, rigid gas permeable materials and rigid materials that are known to be useful for producing ophthalmic lenses, *e.g.*, contact lenses. Suitable hydrogel materials typically have a crosslinked hydrophilic network and hold between about 35% and about 75%, based on the total weight of the hydrogel material, of water. Examples of suitable hydrogel materials include copolymers having 2-hydroxyethyl methacrylate and one or more comonomers such as 2-hydroxy acrylate, ethyl acrylate, methyl methacrylate, vinyl pyrrolidone, N-vinyl acrylamide, hydroxypropyl methacrylate, isobutyl methacrylate, styrene, ethoxyethyl methacrylate, methoxy triethyleneglycol methacrylate, glycidyl methacrylate, diacetone acrylamide, vinyl acetate, acrylamide, hydroxytrimethylene acrylate, methoxy methyl methacrylate, acrylic acid, methacrylic acid, glyceryl ethacrylate and dimethylamino ethyl acrylate. Other suitable hydrogel materials include copolymers having methyl vinyl carbazole or dimethylamino ethyl methacrylate. Another group of suitable hydrogel materials include polymerizable materials such as modified polyvinyl alcohols, polyethyleneimines and polyvinylamines, for example, disclosed in U.S. Patent No. 5,508,317, issued to Beat Müller and International Patent Application No. PCT/EP96/01265. Yet, another group of highly suitable hydrogel materials include silicone copolymers disclosed in International Patent Application No. PCT/EP96/01265. Suitable rigid gas permeable materials for the present invention include cross-linked siloxane polymers. The network of such polymers incorporates appropriate cross-linkers such as N,N" -dimethyl bisacrylamide, ethylene glycol diacrylate, trihydroxy propane triacrylate, pentaerythtritol tetraacrylate and other similar polyfunctional acrylates or methacrylates, or vinyl compounds, *e.g.*, N-methylamino divinyl carbazole. Suitable rigid materials include acrylates, *e.g.*, methacrylates, diacrylates and dimethacrylates, pyrrolidones, styrenes, amides, acrylamides, carbonates, vinyls, acrylonitriles, nitriles, sulfones and the like. Of the suitable materials, hydrogel materials are particularly suitable for the present invention.

The present multifocal optical lens can be actively and selectively controlled to provide one desired optical power at a time without or substantially without optical interference from the other optical powers of the lens, unlike conventional bifocal lenses. In addition, the programmable nature of the HOE of the active lens makes the lens highly suitable for correcting ametropic conditions that are not easily accommodated by conventional corrective optical lenses. For example, the active lens can be programmed to have corrective measures for the unequal and distorted corneal curvature of an irregular astigmatic condition by specifically designing the object and reference light configurations.

As mentioned previously, the invention may be utilized in the embodiment of an intraocular lens. In this embodiment the HOE of the lens is formed according to the methods described above. The primary difference between this embodiment and the previously discussed embodiments is that this lens is designed to be inserted into the eye. Such lenses, methods of manufacturing such lenses, and methods of inserting such lenses are generally known to those skilled in the art. These lenses and methods of manufacture are described in several publications such as U.S. Patent 5,776,192 to McDonald; U.S. Patent 5,044,743 to Ting; U.S. Patent 4,595,070 to McDonald; and U.S. Patent 4,769,035 to Kelman.

## Claims

1. A multi-focal optical lens (14) comprising two holographic optical elements (30,32) and at least two focusing elements (16,18), wherein the holographic optical elements (30,32) have interference fringe patterns each having a finite ray acceptance angle or range of angles and diffract up to 100% of incoming light when the incident angle ($\theta$) of the incoming light is within the respective finite ray acceptance angle ($\alpha$) or range of angles such that the Bragg condition is met, and wherein the holographic optical elements (30,32) have a substantially neutral focusing power and are arranged laterally adjacent to each other and adjacently in front of the outer surface or behind the inner surface of the respective focusing elements (16,18), or encapsulated within the respective focusing elements when viewed in the advancing direction of the incoming light, the holographic elements being switchable such that when one holographic optical element (32) is active the other (30) is inactive.

2. An optical lens according to claim 1, wherein said optical lens is biocompatible.

3. An optical lens according to claim 1 or claim 2, wherein said optical lens is a contact lens.

4. An optical lens according to claim 1 or claim 2, wherein said optical lens is an intraocular lens.

5. An optical lens according to claim 1 or claim 2, wherein said optical lens is a spectacle lens.

6. An optical lens according to any one of claims 1 to 5, wherein said holographic optical element is a transmission volume holographic optical element.

7. An optical lens according to any one of claims 1 to 5, wherein said holographic optical element is a reflective holographic optical element that redirects incoming light when the incident angle ($\theta$) of the incoming light is within the finite ray acceptance angle ($\alpha$) of the holographic optical element.

## Patentansprüche

1. Optische Multifokallinse (14), umfassend zwei holographische optische Elemente (30, 32) und mindestens zwei fokussierende Elemente (16, 18), wobei die holographischen optischen Elemente (30, 32) Interferenzstreifenmuster, jeweils mit einem endlichen Strahlöffnungswinkel oder Bereich von Winkeln, aufweisen und bis zu 100 % des

ankommenden Lichtes beugen, wenn der Einfallswinkel (Θ) des ankommenden Lichtes innerhalb des jeweiligen endlichen Strahlenöffnungswinkels (α) oder Bereichs von Winkeln liegt, sodass die Bragg-Bedingung erfüllt ist, und wobei die holographischen optischen Elemente (30, 32) eine im Wesentlichen neutrale Fokussierungsstärke aufweisen, und seitlich benachbart zueinander und benachbart vor der Außenfläche oder hinter der Innenfläche der jeweiligen Fokussierelemente (16, 18) angeordnet sind, oder innerhalb der jeweiligen Fokussierelemente eingekapselt sind, wenn in der fortschreitenden Richtung des ankommenden Lichtes gesehen, wobei die holographischen Elemente schaltbar sind, sodass, wenn ein holographisches optisches Element (32) aktiv ist, das andere (30) inaktiv ist.

**2.** Optische Linse nach Anspruch 1, wobei die optische Linse biokompatibel ist.

**3.** Optische Linse nach Anspruch 1 oder Anspruch 2, wobei die optische Linse eine Kontaktlinse ist.

**4.** Optische Linse nach Anspruch 1 oder Anspruch 2, wobei die optische Linse eine Intraokularlinse ist.

**5.** Optische Linse nach Anspruch 1 oder Anspruch 2, wobei die optische Linse eine Brillenlinse ist.

**6.** Optische Linse nach einem der Ansprüche 1 bis 5, wobei das holographische optische Element ein optisches Transmissionsvolumen-holographisches Element ist.

**7.** Optische Linse nach einem der Ansprüche 1 bis 5, wobei das holographische optische Element ein reflektierendes holographisches optisches Element ist, das ankommendes Licht, wenn der Einfallswinkel (Θ) des ankommenden Lichtes innerhalb des endlichen Strahlenöffnungswinkels (α) von dem holographischen optischen Element ist, neu ausrichtet.

**Revendications**

**1.** Lentille optique multifocale (14) comportant deux éléments optiques holographiques (30, 32) et au moins deux éléments de focalisation (16, 18), dans laquelle les éléments optiques holographiques (30, 32) ont des modèles de franges d'interférence ayant chacun un angle fini ou une plage d'angles d'admission de rayon finie et diffractent jusqu'à 100 % de la lumière entrante lorsque l'angle incident (θ) de la lumière entrante coïncide avec l'angle (α) ou est compris dans la plage d'angles d'admission de rayon fini(e) de sorte que l'on répond à la condition de Bragg, et dans laquelle les éléments optiques holographiques (30, 32) ont une puissance de focalisation essentiellement neutre et sont disposés latéralement adjacents les uns aux autres et de façon adjacente devant la surface externe ou derrière la surface interne des éléments de focalisation respectifs (16, 18), ou encapsulés au sein des éléments de focalisation respectifs lorsqu'ils sont vus dans la direction d'avancement de la lumière entrante, les éléments holographiques pouvant être commutés de façon telle que quand un élément optique holographique (32) est actif, l'autre (30) est inactif.

**2.** Lentille optique selon la revendication 1, dans laquelle ladite lentille optique est biocompatible.

**3.** Lentille optique selon la revendication 1 ou 2, dans laquelle ladite lentille optique est une lentille de contact.

**4.** Lentille optique selon la revendication 1 ou 2, dans laquelle ladite lentille optique est une lentille intraoculaire.

**5.** Lentille optique selon la revendication 1 ou 2, dans laquelle ladite lentille optique est un verre de lunettes.

**6.** Lentille optique selon l'une quelconque des revendications 1 à 5, dans laquelle ledit élément optique holographique est un élément optique holographique de volume en transmission.

**7.** Lentille optique selon l'une quelconque des revendications 1 à 5, dans laquelle ledit élément optique holographique est un élément optique holographique réfléchissant qui redirige la lumière entrante lorsque l'angle incident (θ) de la lumière entrante coïncide avec l'angle (α) fini d'admission de rayon de l'élément optique holographique.

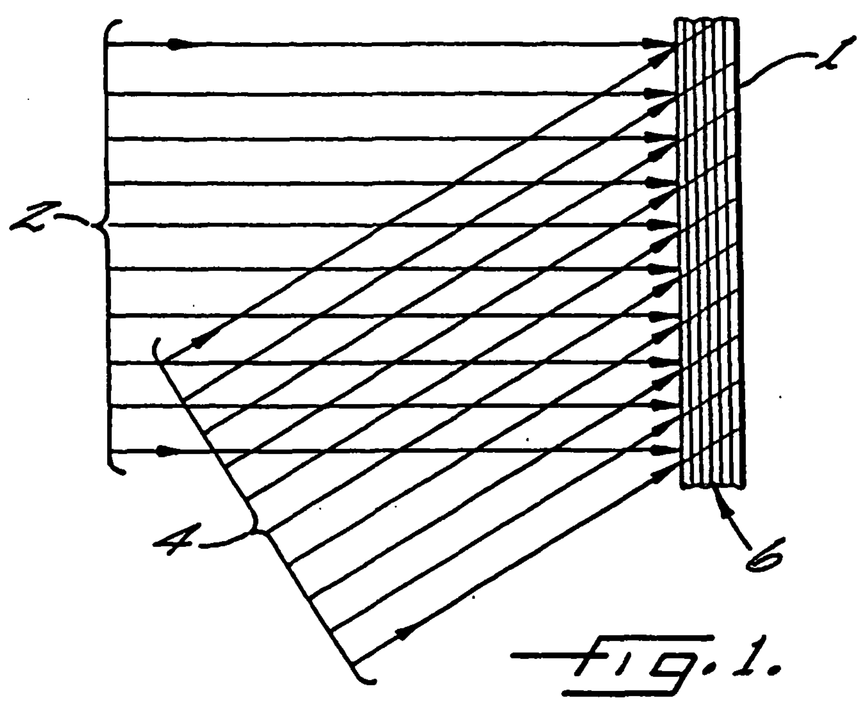


Fig.1.

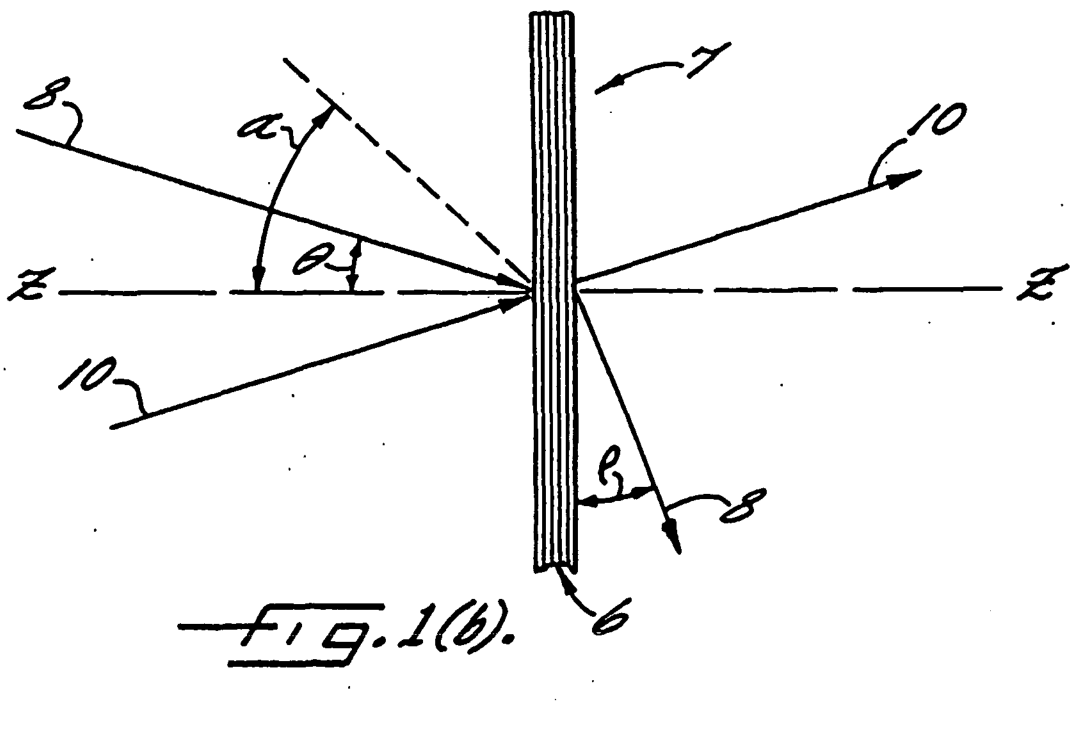


Fig.1(b).

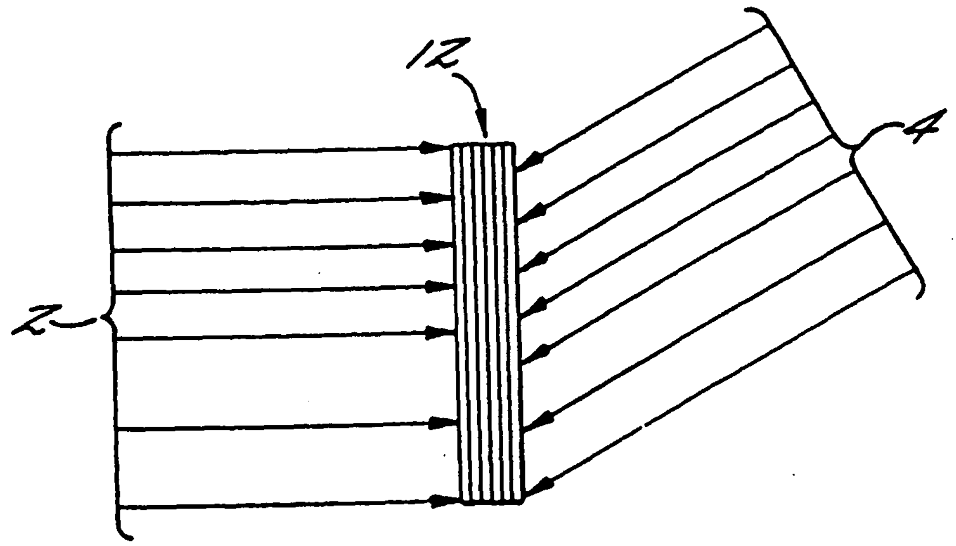


Fig. 2.

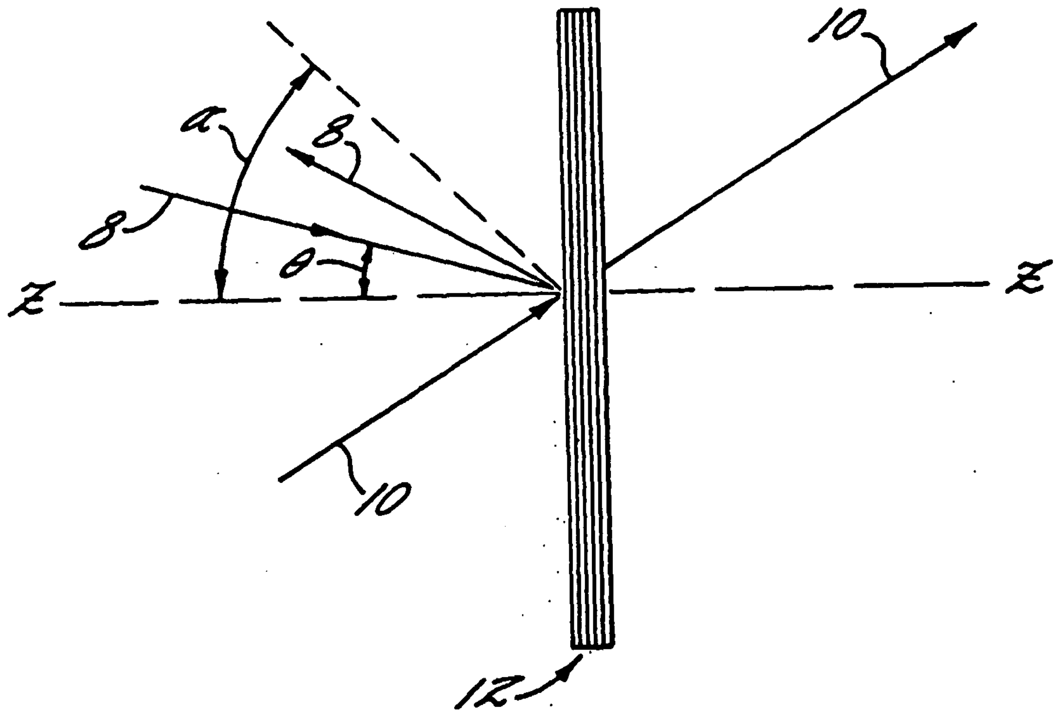


Fig. 2(a).

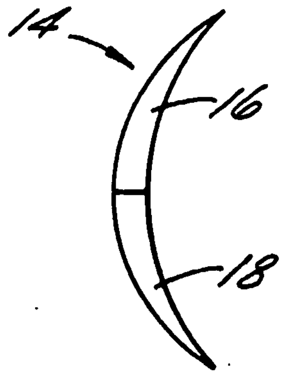


Fig. 3.

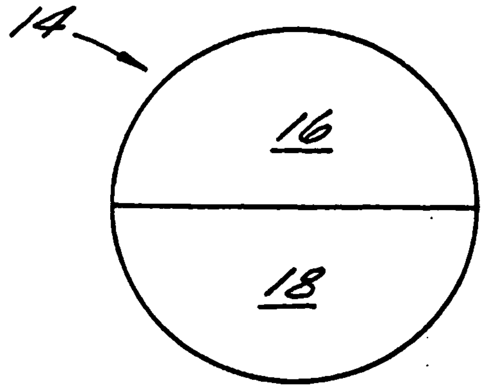


Fig. 3(a).

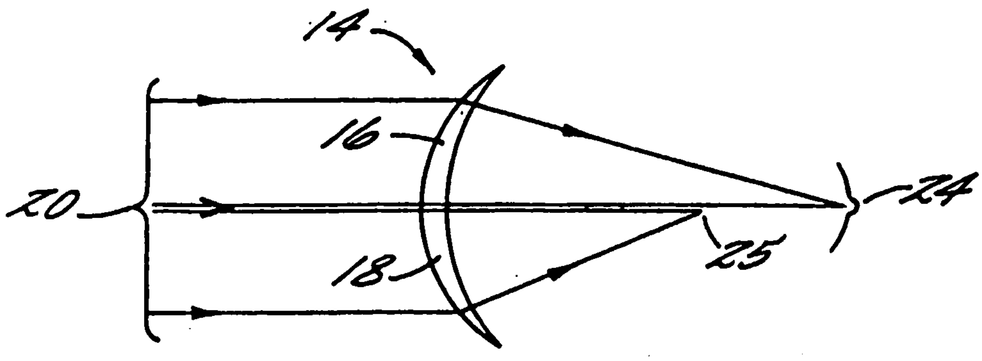


Fig. 4.

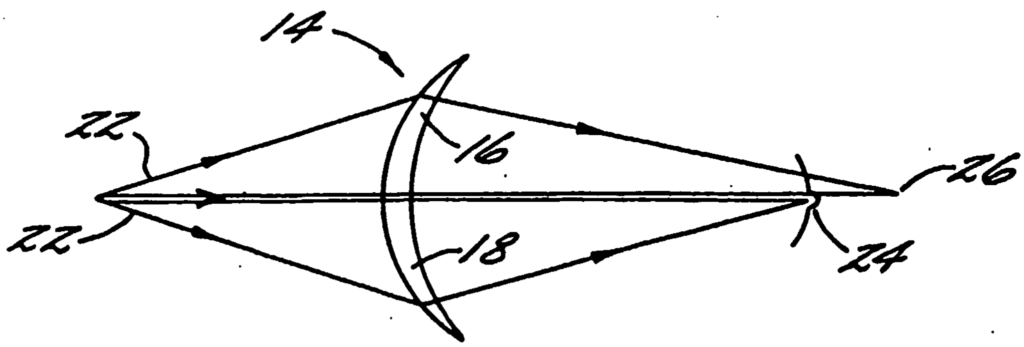


Fig. 4(a).

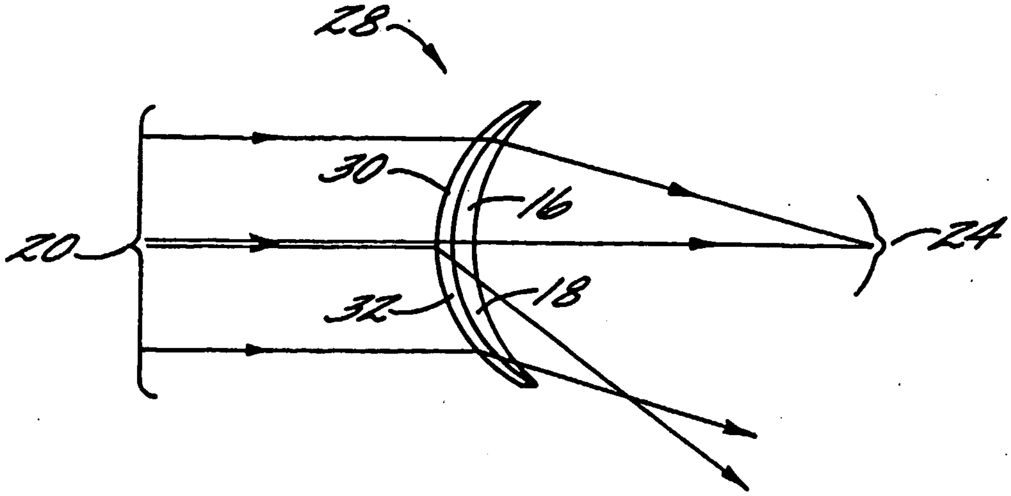


Fig. 5.

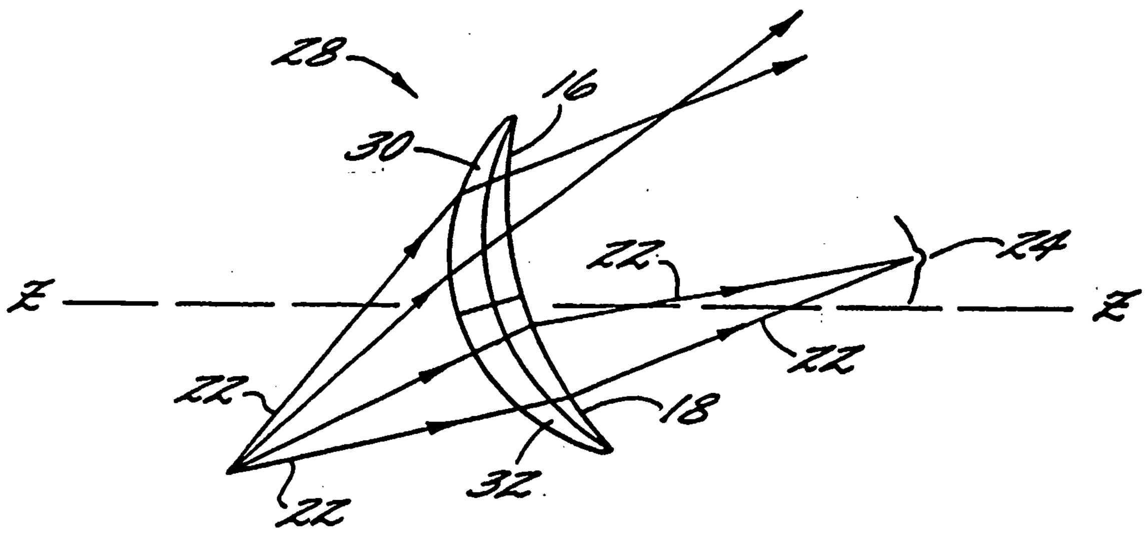


Fig. 5(a).

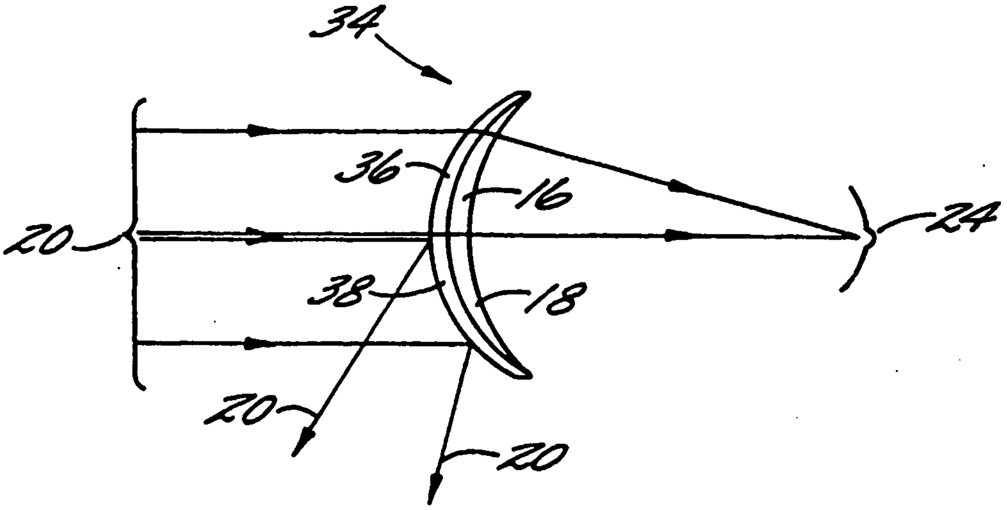


Fig. 6.

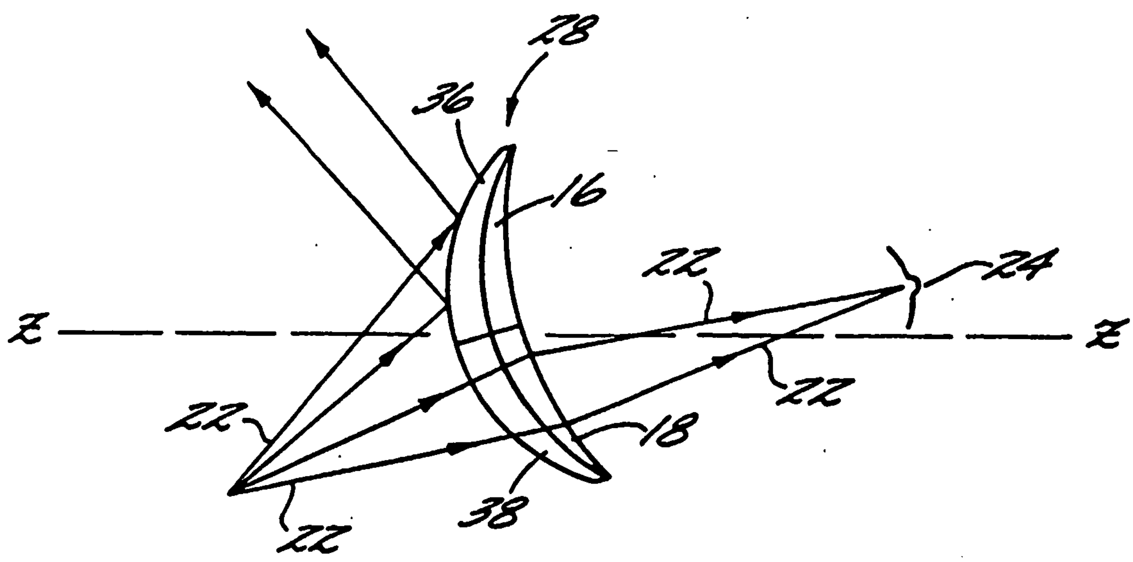


Fig. 6(a).

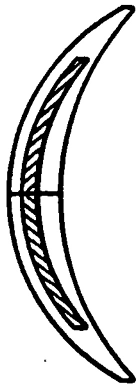

Fig. 7.

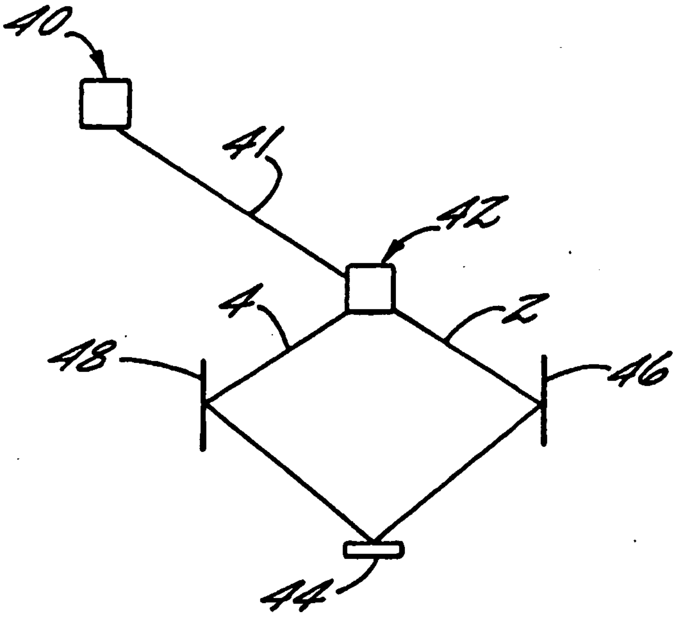


Fig. 8.

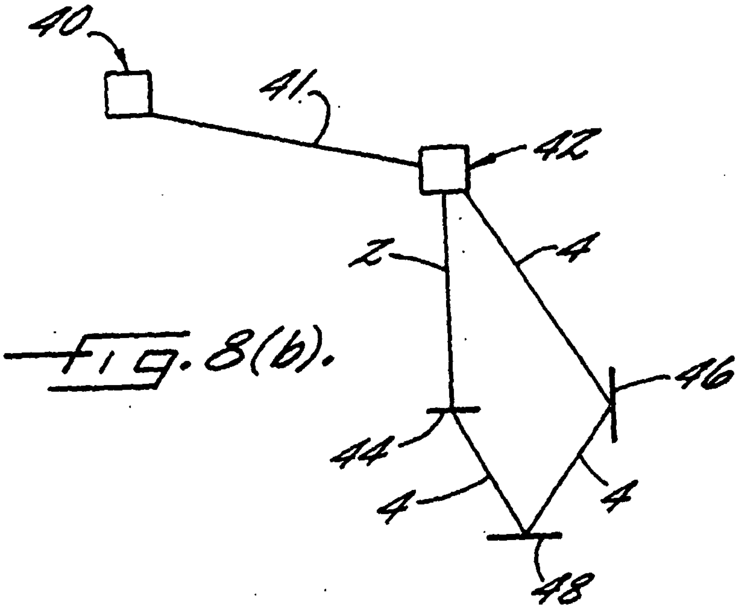


Fig. 8(b).

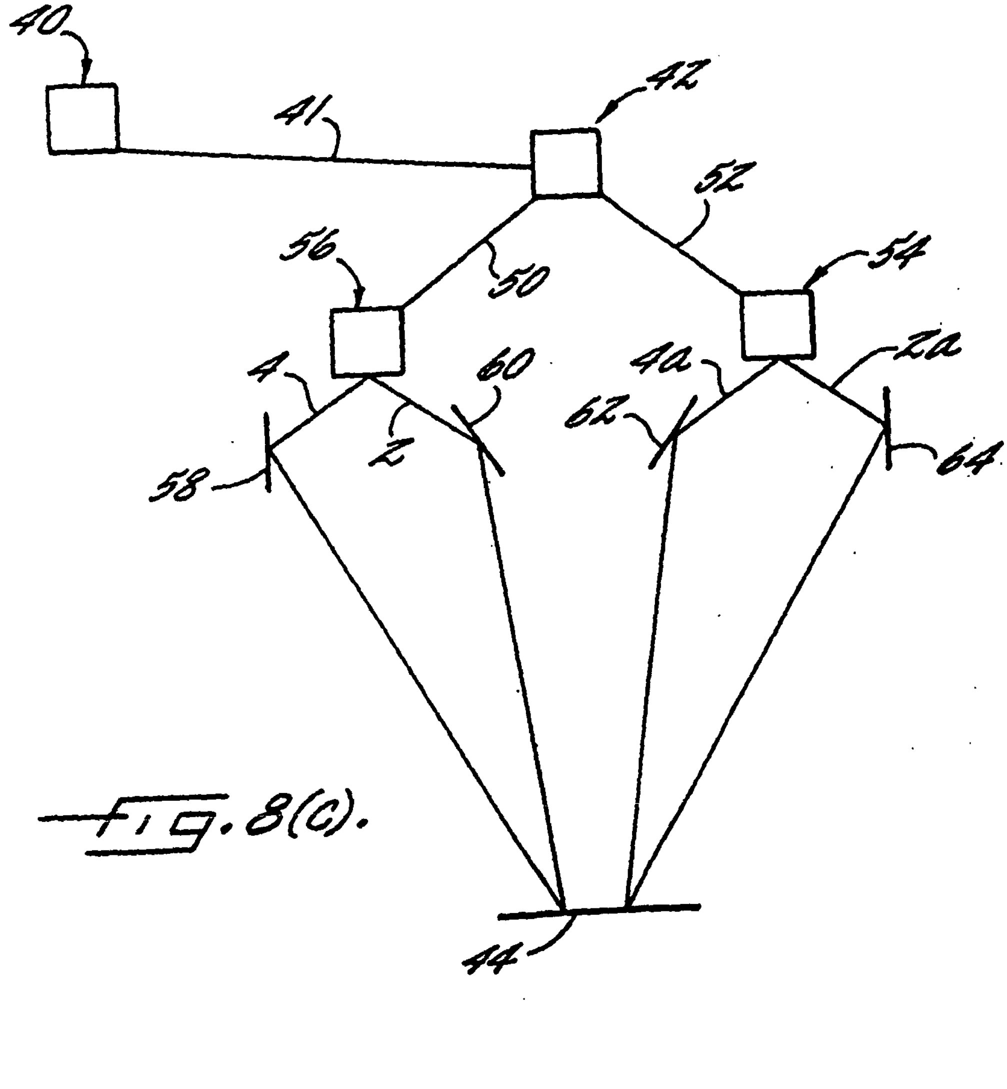


Fig. 8(c).